# EUROPEAN PATENT APPLICATION

(11) **EP 1 760 943 A1**
(43) Date of publication of application: **07.03.2007**
(21) Application number: 04822185.7
(22) Date of filing: 10.12.2004
(51) Int. Cl.: H04L 12/28

(54) **WIRELESS COMMUNICATION SYSTEM**

(30) Priority: 17.06.2004 JP 2004179722
(71) Applicant: MATSUSHITA ELECTRIC INDUSTRIAL CO., LTD., Osaka 571-8501 (JP)
(72) Inventor: HORITA, Seiji, Matsushita Elect.Ind.Co.,Ltd, Osaka-shi, Osaka 540-6319 (JP); SAKANISHI, Yasuaki, Matsushita Elect.Ind.Co.,Ltd, Osaka-shi, Osaka 540-6319 (JP); HIGASHIDA, Masaaki, Matsushita Elect.Ind.Co.,Ltd, Osaka-shi, Osaka 540-6319 (JP); TANAKA, Shotaro, Matsushita Elect.Ind.Co.,Ltd, Osaka-shi, Osaka 540-6319 (JP); INOUE, Naoyuki, Matsushita Elect.Ind.Co.,Ltd, Osaka-shi, Osaka 540-6319 (JP); TANIGUCHI, Kenshi, Matsushita Elect.Ind.Co.,Ltd, Osaka-shi, Osaka 540-6319 (JP); EZAKI, Toshihiro, Matsushita Elect.Ind.Co.,Ltd, Osaka-shi, Osaka 540-6319 (JP)
(74) Representative: Eisenführ, Speiser & Partner
(86) International application number: PCT/JP2004/018478
(87) International publication number: WO 2005/125105

(57) **Abstract**

A radio communication system includes a plurality of radio terminal apparatuses (40) each arranged at a previously determined position, radio base station apparatuses (30) for holding radio communications with these apparatuses (40), and a communication system controller (10) for communicating with the respective radio terminal apparatus (40) via the respective radio base station apparatuses (30), where the communication system controller is connected to the respective radio base station apparatuses (40) via a LAN (60). The communication system controller (10) stores therein an ad-hoc radio communication permission table (6a) indicating permission or non-permission of each of direct radio communications between the respective radio terminal apparatuses (40), judges whether or not the direct radio communication is permitted based on the ad-hoc radio communication permission table (6a), in response to a request signal for a direct radio communication with a further radio terminal apparatuses (40) received from each radio terminal apparatuses (40) via the radio base station apparatuses (30), and transmits a notice signal including a result of the judgment to the radio terminal apparatus (40) which transmitted the request signal.

## Description

### TECHNICAL FIELD

The present invention relates to a radio communication system for establishing a radio communication among a plurality of radio communication terminal apparatuses in an environment such as a space in an airplane (referred to as an in-flight space hereinafter), in which the plurality of radio communication terminal apparatuses are used at fixed positions and are closely spaced.

### BACKGROUND ART

In recent years, radio communication systems have been increasingly widely spread such as those in conformity with IEEE802.11a/b/g. These radio communication systems are called radio local area network (local area network is referred to as a LAN hereinafter) systems, and it can be considered that the wires of the Ethernet (registered trade mark) used in a wired LAN system is replaced by wireless.

Communication modes of the radio LAN system mainly include two types. When expressed in terms of the wired LAN system, one of them is an "ad-hoc mode" which realizes such a state that a semi-duplex node is connected by means of a repeater hub (See a Patent document 1, for example). In this communication mode, two radio terminal apparatuses directly hold the radio communication with each other without any intervention, by sharing an identical frequency band. Another communication mode is an "infrastructure mode". In this communication mode, an access point apparatus controls radio terminal apparatuses in a service area thereof and handles all of accesses made in the service area. The access point apparatus also serves as a bridge for relaying with internal and external apparatuses so that the radio terminal apparatuses located at the inside of the service area can communicate with an external network.

In addition, referring to IEEE802.11b for use in the radio LAN system as an example, the frequency used for the radio communication is located in a frequency band from 2.400GHz to 2.485GHz, which is called the ISM band (Industry Science Medical Band), and the frequency band is used with being divided into 13 channels by 5 MHz. When channels which are located apart from each other are selectively used, any radio interference is not caused even when adjacent radio terminal apparatuses hold different radio communications, respectively, and the adjacent radio terminal apparatuses can behave as if they were connected to separate networks, respectively. However, since there is a limit upon selecting combinations of the channels which do not cause any radio interference, an ESS-ID (Extended Service Set Identifier) is defined in IEEE802.11 as another network identifying method. The ESS-ID is a communication identifying code included at the header of the packet signal transmitted in the radio LAN system. Since the packet signal having a different code is ignored, the communication cannot be established between the radio terminal apparatuses having different ESS-IDs.

At the beginning, the radio LAN system characterized as above was intended to be used for in a mobile personal computer, a portable personal computer, a portable radio terminal apparatus, and the like. However, recently, in order to avoid a wiring complication, using of the radio LAN system has been under consideration for providing a network service for use in terminal apparatuses used at fixed positions.

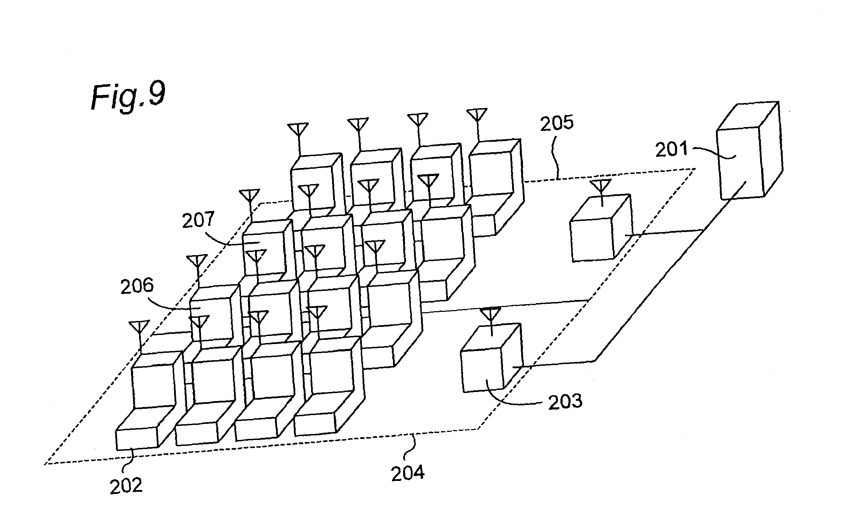

Fig. 9 shows an example (referred to as a conventional example hereinafter) of providing a radio LAN service for use in terminal apparatuses used at fixed positions. In the conventional example, the radio LAN system is utilized in order to deliver information data and image data to radio terminal apparatuses 202, 206 and 207 installed at respective seats in the airplane. The information data and the image data are stored in a head-end unit 201 of the same system and delivered to the terminal 202 installed at each of the seats via a radio base station apparatus 203, which is an access point apparatus connected to the head-end apparatus 201.

When the radio terminal apparatuses 202, 206 and 207 are closely spaced as in the conventional example, the number of the radio terminal apparatuses included in a serviceable area of one access point apparatus significantly increases. However, the access point apparatus has a limitation of its processing capability, and this leads to such a problem that throughputs upon transmitting data to the respective radio terminal apparatuses decrease. This problem is a fatal defect in such a case where the image data is transmitted using the radio communication. As a countermeasure against the problem, the concept of "cell" is generally adopted. The concept of "cell" is adopted in a field such as a radio communication between mobile phones and a radio base station apparatus. In order to perform a division into cells, the in-flight space is divided into a plurality of areas, and one access point apparatus 203 is allocated to one area 204. The access point apparatus and the terminal in the area hold radio communication with each other by using a predetermined channel or ESS-ID. In this case, by setting so that communications are hold in adjacent areas 204 and 205 using different channels or different ESS-IDs, respectively, it is possible to prevent the terminal 207 in the area 205 from establishing communication with the access point apparatus 203 in charge of another area 204. Accordingly, the number of the radio terminal apparatuses covered by each access point apparatus can be clarified, and this allows communication quality provided for the radio terminal apparatuses to be managed easily.

Patent document 1: Japanese patent laid-open publication No. 2001-197571.
Patent document 2: Japanese patent laid-open publication No. 2000-224640.
Patent document 3: Japanese patent laid-open publication No. 2004-056333.

### DISCLOSURE OF INVENTION

### PROBLEMS TO BE SOLVED BY THE INVENTION

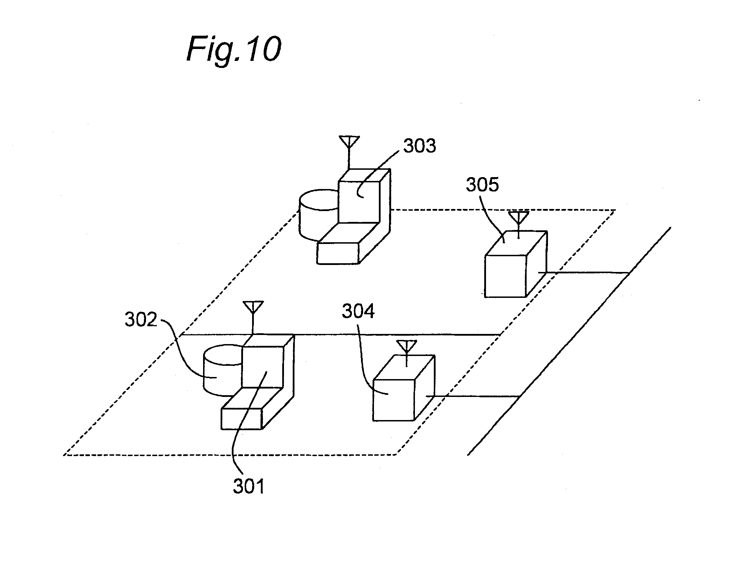

However, the division into the cells in the radio LAN system according to the conventional example causes such a problem that the radio terminal apparatus 200 in the area 204 and the radio terminal apparatus 207 in the area 205 are closely disposed, however, they cannot shift to the ad-hoc mode. The problem is described below with reference to Fig. 10. Referring to Fig. 10, terminals 301 and 303 belong to different areas, and communicate with access point apparatuses 304 and 305, respectively.

In this conventional example, such a case is considered that the radio terminal apparatus 303 requests data 302 in a recording medium of the radio terminal apparatus 301. When data transfer is performed with remaining in the infrastructure mode, first of all, the data 302 is transferred to the access point apparatus 304, and then, data received by the access point apparatus is transmitted to the access point apparatus 305 via a core network of the radio communication system. The radio terminal apparatus 303 can acquire desired data by acquiring data from the access point apparatus 305. However, when the data 302 has a large size, the access point apparatuses 304 and 305 are required to process a large volume of packets, and this leads to delay in delivering packets to the other radio terminal apparatuses covered by the respective access point apparatuses 304 and 305. As a result, there is a possibility of deterioration in the quality of the service provided for the whole radio communication system.

Then, it is considered to be effective to hold data communication between the radio terminal apparatuses 301 and 303 using the ad-hoc mode. When the radio terminal apparatuses 301 and 303 hold the ad-hoc mode communication using a common channel or ESS-ID, data transfer at a higher throughput can be realized without affecting the other radio terminal apparatuses in the same service area. However, the radio terminal apparatuses 301 and 303 are present in the different cells, and use the different channels or ESS-IDs in the communication with the access point apparatuses in charge of the respective radio terminal apparatuses. Accordingly, since the respective radio terminal apparatuses are in such a state that they are hidden from each other in terms of the radio LAN system, the radio terminal apparatuses cannot find each other and cannot shift to the ad-hoc mode. In order to establish the radio communication in the ad-hoc mode, it is necessary to provide means for the radio terminal apparatuses to acquire a channel or ESS-ID commonly used by the both radio terminal apparatuses, and to reset their settings for the communication in the radio LAN system by themselves. In addition, the radio terminal apparatuses 301 and 303 belong to the different cells, and it is unclear whether or not a physical distance therebetween is small enough for allowing the communication in the ad-hoc mode to be hold. When the shift to the ad-hoc mode is attempted though the distance between the radio terminal apparatuses is large, it would take an endless time to search a radio terminal apparatus of the other party for the communication, resulting in a long-term interruption in the communication, which is stressful for a user of the radio terminal apparatuses.

The above mentioned unfavorable situation is caused in the case of playing a network-capable game which requires a large capacity of data communication and in the case of delivering contents using peer-to-peer data diffusion between the terminal 301 and 303, and becomes a huge problem to be solved in order to enrich the contents and assure the communication quality in the services provided by the network.

Further, the Patent document 2 discloses a "mobile radio apparatus" as an apparatus which utilizes positional information when the mobile radio apparatus selects an optimum path for performing communication via a fixed base station. The path selection executed by the "mobile radio apparatus" is such a method that a previously designed path is selected using information on base stations previously stored in database, since the base stations communicating with the mobile radio apparatus are fixed. Accordingly, the path selection is not suitable for path designing in the ad-hoc network which does not include any fixed base station. In order to solve the problem, the Patent document 3 discloses a mobile communication apparatus and the like for designing a path between radio communication apparatuses having no fixed base station using positional information of the radio communication apparatus, and for obtaining a communication-permitted area efficiently and with a reduced error using latitudes and longitudes at a plurality of points. However, there is such a problem that an expensive position detecting apparatus such as a GPS (Global Positioning System) is needed.

An object of the present invention is to provide a radio communication system capable of solving the above mentioned problems, in which respective radio terminal apparatuses can shift to the ad-hoc mode certainly, provided that the radio terminal apparatuses are closely spaced, even when they are disposed crossing service areas of access point apparatuses.

### MEANS FOR SOLVING THE PROBLEMS

A radio communication system according to a first invention includes a plurality of radio terminal apparatuses each arranged at a previously determined position, at least one radio base station apparatus for holding a radio communication with the plurality of radio terminal apparatuses, and a communication control apparatus connected to the respective radio base station apparatuses via a cable circuit, the communication control apparatus communicating with the respective radio terminal apparatuses via one of the radio base station apparatuses. In this case, the communication control apparatus includes storage means for storing therein a first table indicating permission or non-permission of direct radio communication between the respective radio terminal apparatuses, and control means for judging whether or not the direct radio communication is permitted based on the first table in response to a request signal for requesting the direct radio communication with a further radio terminal apparatus received from the radio terminal apparatus via the radio base station apparatus, and for transmitting a notice signal including a result of the judgment to the radio terminal apparatus which transmitted the request signal, via the radio base station apparatus.

In the above mentioned radio communication system, the storage means of the communication control apparatus preferably further stores therein a second table indicating communication parameters currently used by each of the radio terminal apparatuses. In addition, the control means of the communication control apparatus preferably determines a communication parameter for the requested direct radio communication referring to the second table when the request is possible, and transmits a notice signal including the communication parameter to the radio terminal apparatus which transmitted the request signal, via the radio base station apparatus.

In addition, in the above mentioned radio communication system, the radio terminal apparatus which transmitted the request signal preferably transmits a response signal request for a direct radio communication with a terminal apparatus of other party, using a plurality of communication parameters, in response to the notice signal, and the radio terminal apparatus which transmitted the request signal determines a communication parameter with the terminal apparatus of other party, based on a response signal transmitted from the terminal apparatus of other party in response to the response signal request.

A radio communication system according to a second invention includes a plurality of radio terminal apparatuses each arranged at a previously determined position, at least one radio base station apparatus for holding a radio communication with the plurality of radio terminal apparatuses, and a communication control apparatus connected to the respective radio base station apparatuses via a cable circuit, the communication control apparatus communicating with the respective radio terminal apparatuses via one of the radio base station apparatuses. In this case, each of the radio terminal apparatuses includes first storage means for storing therein a first table indicating permission or non-permission of direct radio communication between the respective radio terminal apparatuses, and communication control means for judging whether or not the direct radio communication with a further radio terminal apparatus is permitted referring to the first table, upon requesting the direct radio communication with the further radio terminal apparatus.

In the above mentioned radio communication system, the communication control means of each of the radio terminal apparatuses preferably transmits a request signal for the direct radio communication with the further radio terminal apparatus, to the communication control apparatus via the radio base station apparatus, when the direct radio communication is possible. In addition, the communication control apparatus includes second storage means for storing therein a second table indicating communication parameters currently used by each of the radio terminal apparatuses, and control means for determining the communication parameter for the requested direct radio communication referring to the second table in response to the request signal for the direct radio communication with the further radio terminal apparatus transmitted from each of the radio terminal apparatuses, and for transmitting a notice signal including the communication parameter to the radio terminal apparatus which transmitted the request signal via the radio base station apparatus.

In addition, in the above mentioned radio communication system, the communication control means of each of the radio terminal apparatuses preferably transmits a response signal request for a direct radio communication with a terminal apparatus of other party, using a plurality of communication parameters, when the direct radio communication is possible, and the communication control means of each of the radio terminal apparatuses determines a communication parameter with the terminal apparatus of other party, based on a response signal transmitted from the terminal apparatus of other party in response to the response signal request.

Further, in the above mentioned radio communication system, the communication parameter is preferably one of a channel, a communication identifier, and a radio-wave frequency.

Still further, in the above mentioned radio communication system, each of the respective radio terminal apparatuses is preferably identified by an apparatus identifier including one of an IP address, a terminal number, and a positional coordinate representation. In this case, the request signal preferably includes the apparatus identifier.

### EFFECTS OF THE INVENTION

Therefore, according to the radio communication system according to the present invention, radio terminal apparatuses having different communication parameters such as the channel or ESS-ID used in the infrastructure mode can shift to radio communication in the ad-hoc mode. Accordingly, the communication quality is assured by dividing the in-flight space into a plurality of service areas which use different communication parameters such as the channel or ESS-ID, for example. In addition, the radio base station apparatus and the communication control apparatus are not subjected to loads by utilizing direct radio communication between the radio terminal apparatuses.

In addition, the communication control apparatus supervises the communication status of all of the radio terminal apparatuses using the tables so that an optimum communication parameter such as the channel or ESS-ID usable by a pair of radio terminal apparatuses in the ad-hoc mode communication can be allocated to the pair of radio terminal apparatuses, and the quality of the radio communication in the ad-hoc mode equal to or larger than a predetermined value can be easily established.

### BRIEF DESCRIPTION OF DRAWINGS

Fig. 1 is a block diagram showing a configuration of a radio LAN system according to a preferred embodiment of the present invention.
Fig. 2 is a block diagram showing a configuration of a communication system controller 10 of Fig. 1.
Fig. 3 is a block diagram showing a configuration of a radio base station apparatus 30 of Fig. 1.
Fig. 4 is a block diagram showing a configuration of a radio communication terminal apparatus 40 of Fig. 1.
Fig. 5 is a diagram showing an example of an ad-hoc radio communication permission table 6a stored in a hard disk memory 6 of Fig. 2
Fig. 6 is a diagram showing an example of a communication status table 6b stored in the hard disk memory 6 of Fig. 2.
Fig. 7 is a sequence chart showing a first operation example of the radio communication system of Fig. 1.
Fig. 8 is a sequence chart showing a second operation example of the radio communication system of Fig. 1.
Fig. 9 is a block diagram showing a configuration of a radio LAN system according to a first conventional example.
Fig. 10 is a block diagram for describing problems of the radio LAN system of Fig. 9.

### DESCRIPTION OF NUMERICAL REFERENCES

- 1: main controller,
- 2: display unit,
- 3: operation unit,
- 4: ROM,
- 5: RAM,
- 6: hard disk memory,
- 6a: ad-hoc radio communication permission table,
- 6b: communication status table,
- 7: communication interface,
- 8: service data memory,
- 9: bus,
- 10: communication system controller,
- 30, 30-1, and 30-2: radio base station apparatus,
- 30A: antenna,
- 31: controller,
- 32: communication interface,
- 33: radio communication transceiver circuit,
- 40, 40-1, and 40-2: radio communication terminal apparatus,
- 40A: antenna,
- 41: main controller,
- 42: display unit,
- 43: operation unit,
- 44: ROM,
- 45: RAM,
- 46: hard disk memory,
- 47: PC card interface,
- 48: bus,
- 49: radio LAN card,
- 50: in-flight space,
- 51 and 52: cell,
- 60: wired LAN.

### BEST MODE FOR CARRYING OUT THE INVENTION

### PREFERRED EMBODIMENT

A preferred embodiment according to the present invention will be described below with reference to the drawings giving an example describing such a case where a service using a radio LAN is provided in an airplane. In the attached drawings, the same numerical references denote components similar to each other.

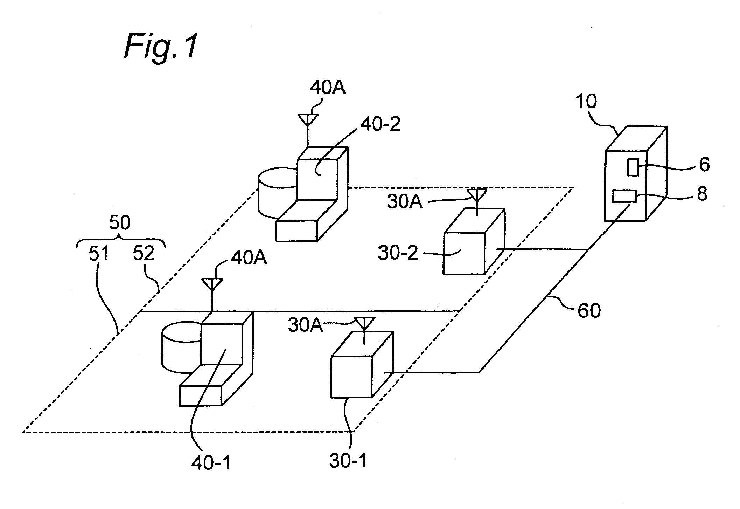

Fig. 1 is a block diagram showing a configuration of a radio LAN system according to the preferred embodiment of the present invention. Referring to Fig. 1, in an in-flight space 50 of the airplane, radio terminal apparatuses 40-1 and 40-2 (denoted generically by a numerical reference 40 hereinafter) are installed at respective passenger seats whose positions are previously determined. A communication system controller 10 is a control apparatus for controlling radio communications in the whole radio LAN system. In addition, the communication system controller 10 previously stores information data and image data with respect to the respective radio terminal apparatuses 40 in a service data memory 8 of a hard disk memory in the communication system controller 10, and delivers various stored data to the respective radio terminal apparatuses 40 via radio base station apparatuses 30-1 and 30-2 (denoted generically by a numerical reference 30 hereinafter), which are access point apparatuses connected to a wired LAN 60, in response to delivery request signals from the respective radio terminal apparatuses 40.

In addition, the in-flight space 50 is divided into cells 51 and 52 of a plurality of service areas. Different radio LAN channels or ESS-IDs are used in the adjacent cells 51 and 52 so as to restrict the number of the radio terminal apparatuses 40 covered by the each of the radio base station apparatuses 30-1 and 30-2. In addition, IP addresses of the respective radio terminal apparatuses 40 are allocated so that a terminal number of each radio terminal apparatus (referred to as a terminal number hereinafter) can be uniquely determined based on the IP address. Only the two cells 51 and 52 are shown in the in-flight space 50 of Fig. 1, however, at least three cells are actually disposed so that they are not substantially overlapped with each other in a plane. Each of the cells 51 and 52 is provided with at least one radio base station apparatus 30 and at least one radio terminal apparatus 40 or actually a plurality of radio terminal apparatuses 40.

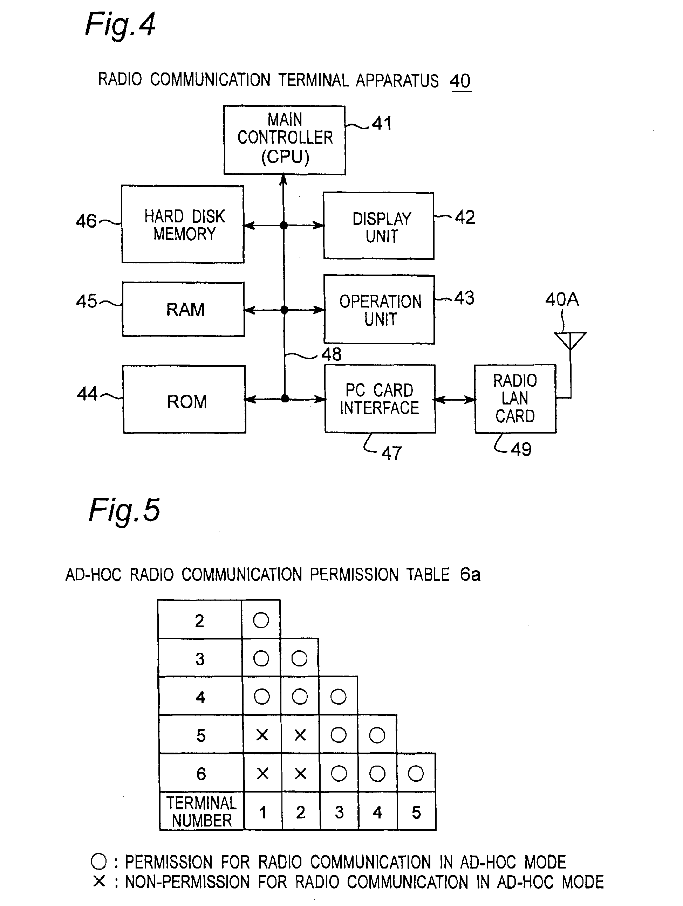

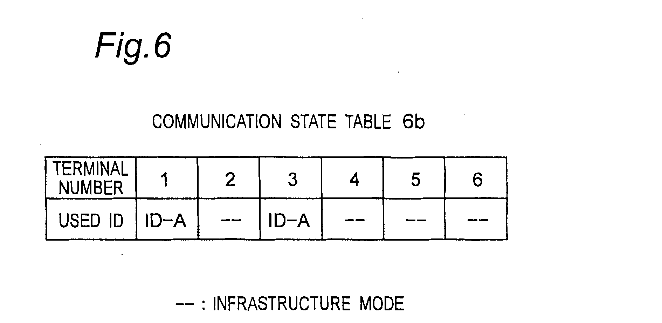

In the present preferred embodiment, the communication system controller 10 is a control apparatus which includes the service data memory 8 of the hard disk memory for previously storing the various data to be delivered to the respective radio terminal apparatuses 40, and controls radio communications in the following modes:
(A) an infrastructure mode in which the respective radio terminal apparatuses 40 hold the radio communication via the radio base station apparatuses 30, which are the access point apparatuses; and
(B) an ad-hoc mode in which the respective radio terminal apparatuses 40 hold the radio communication not via the radio base station apparatuses 30.
In addition, the communication system controller 10 is characterized by controlling the radio communication in the ad-hoc mode using the following tables stored in the hard disk memory 6:
(a) an ad-hoc radio communication permission table 6a for storing data indicating permission or non-permission of the ad-hoc radio communication between the respective radio terminal apparatuses 40 as shown in Fig. 5; and
(b) a communication status table 6b for storing data indicating a used ID (used identifier) of each of the radio terminal apparatus 40 in the ad-hoc mode as shown in Fig. 6.

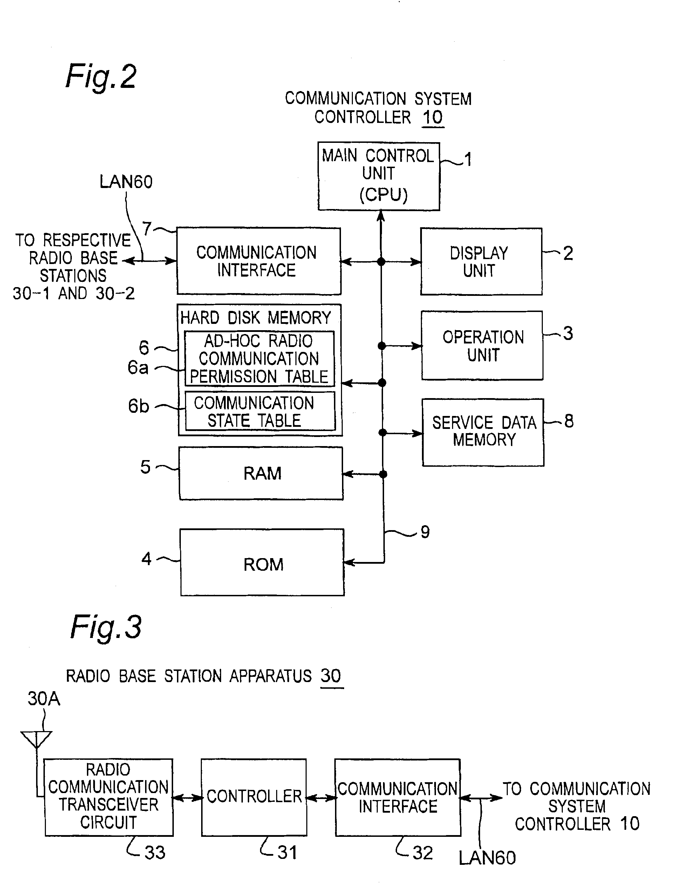

Fig. 2 is a block diagram showing a configuration of the communication system controller 10 of Fig. 1.

Referring to Fig. 2, the communication system controller 10 is constituted by including a main controller 1, a display unit 2, an operation unit 3, a ROM 4, a RAM 5, the hard disk memory 6, a communication interface 7, and the service data memory 8. Concretely speaking, the main controller 1 is constituted by a CPU, and is connected to the other hardware units 2 to 8 via a bus 9 so as to control operation of the communication system controller 10 by controlling the other hardware units 2 to 8 via the bus 9. The display unit 2 is a display apparatus such as a liquid crystal display apparatus (LCD) or a CRT display, and displays operation status of the communication system controller 10 or data inputted by using the operation unit 3. The operation unit 3 includes a mouse and a keyboard including various keys required for operating the communication system controller 10.

The ROM 4 previously stores therein various software programs which is required for the operation of the communication system controller 10 and is executed by the main controller 1. In addition, the RAM 5 is constituted by an SRAM, a flash memory or the like, and serves as a working area of the main controller 1 so as to store therein temporary data generated when the programs are executed. Further, the hard disk memory 6 stores therein application programs executed by the main controller 1 and data for executing the application programs, the ad-hoc radio communication permission table 6a, and the communication status table 6b. The communication interface 7 is connected to the respective radio base station apparatuses 30 via the LAN 60. The communication interface 7 executes a predetermined interface processing including a signal conversion and a protocol conversion on a signal from the main controller 1, and transmits a predetermined signal and data to the respective radio base station apparatuses 30 via the LAN 60. On the other hand, the communication interface 7 receives a signal and data received from the respective radio base station apparatuses 30 via the LAN 60, executes a predetermined interface processing including a signal conversion and a protocol conversion thereon, and outputs a resultant signal and data to the main controller 1. Further, the service data memory 8 stores therein various data, such as the information data and image data to be delivered to a user of the respective radio terminal apparatuses 40.

Fig. 3 is a block diagram showing a configuration of the radio base station apparatus 30 of Fig. 1. Referring to Fig. 3, the radio base station apparatus 30 is constructed by including a controller 31 for controlling operation of the radio base station apparatus 30 by controlling a communication interface 32 and a radio communication transceiver circuit 33, the communication interface 32 for interfacing to the communication system controller 10 via the LAN 60, and the radio communication transceiver circuit 33 which includes an antenna 30A and holds the radio communication with the respective radio terminal apparatuses 40.

Fig. 4 is a block diagram showing a configuration of the radio communication terminal apparatus 40 of Fig. 1.

Referring to Fig. 4, the radio communication control apparatus 40 is a service terminal apparatus installed in each seat of the airplane, for example, and is constructed by including a main controller 41, a display unit 42, an operation unit 43, a ROM 44, a RAM 45, a hard disk memory 46, and a PC card interface 47. A radio LAN card 49 is attached to the PC card interface 47, where the radio LAN card 49 accesses the radio base station apparatus 30 via the radio LAN so as to the radio communication via an antenna 40A. Concretely speaking, the main controller 41 is constituted by a CPU, and is connected to the other hardware units 42 to 47 via a bus 48 so as to control operation of the radio terminal apparatus 40 by controlling the other hardware units 42 to 47. The display unit 42 is a display apparatus such as a liquid crystal display apparatus (LCD) or a CRT display, and displays operation status of the radio terminal apparatus 40 or data inputted by using the operation unit 43. The operation unit 43 includes a mouse and a keyboard including various keys required for operating the radio terminal apparatus 40.

The ROM 44 previously stores therein various software programs required for the operation of the radio terminal apparatus 40 and executed by the main controller 1. In addition, the RAM 45 is constituted by an SRAM, a flash memory or the like, and serves as a working area of the main controller 41 so as to store temporary data generated when the programs are executed. Further, the hard disk memory 46 stores therein application programs executed by the main controller 41 and data for executing the application programs. The PC card interface 47 executes an interface processing with respect to the radio LAN card 49, and transmits a predetermined signal and data to the respective radio base station apparatuses 30 via the radio LAN. On the other hand, the PC card interface 47 receives a signal received from the respective radio base station apparatuses 30 via the LAN 60, executes a predetermined interface processing including a signal conversion and a protocol conversion thereon, and outputs a resultant signal to the main controller 41.

Next, control of the radio communication in the ad-hoc mode by the communication system controller 10 according to the present preferred embodiment is described below in detail.

As shown in Fig. 5, in the hard disk memory 6, the communication system controller 10 stores the ad-hoc radio communication permission table 6a showing whether or not each combination of two radio terminal apparatuses 40 in the in-flight space 50 has such a positional relationship that the ad-hoc radio communication can be hold therebetween. In an example of Fig.5, it is shown that, among the six radio terminal apparatuses 40 each having the terminal number, the radio communication in the ad-hoc mode is not permitted between the terminal numbers 1 and 5, between the terminal numbers 1 and 6, between the terminal numbers 2 and 6, and between the terminal numbers 2 and 5 of the radio terminal apparatuses 40, while the radio communication in the ad-hoc mode is permitted in each of the other combinations. The ad-hoc radio communication permission table 6a stores therein data of the above mentioned relationship when the respective radio terminal apparatuses 40 are fixed in the in-flight space 50, based on results of communication quality measured in the in-flight space 50 previously and an estimation made by using an electromagnetic-field simulation.

In addition, the communication system controller 10 includes means for grasping values of the channels or ESS-IDs used in the radio communications with the radio base station apparatuses 30-1 and 30-2 in the respective cells 51 and 52, and communication modes and parameters used for the radio communications of all of the radio terminal apparatuses 40 in the in-flight space 50. Concretely speaking, in the present preferred embodiment, the communication system controller 10 stores therein the communication status table 6b of Fig. 6, and the communication status table 6b records therein in which of the ad-hoc mode and the infrastructure mode all of the radio terminal apparatuses 40 hold the radio communications, and which ESS-ID or channel the radio terminal apparatuses 40 in the ad-hoc mode are using.

It can be seen from an example of Fig. 6 that the terminal numbers 1 and 3 of the radio terminal apparatuses 40 hold the radio communication in the ad-hoc mode using ESS-ID = ID-A, while the other radio terminal apparatuses 40 perform the radio communications in the infrastructure mode. The communication status table 6b is dynamically rewritten in response to change in the radio communication status of the respective radio terminal apparatuses 40.

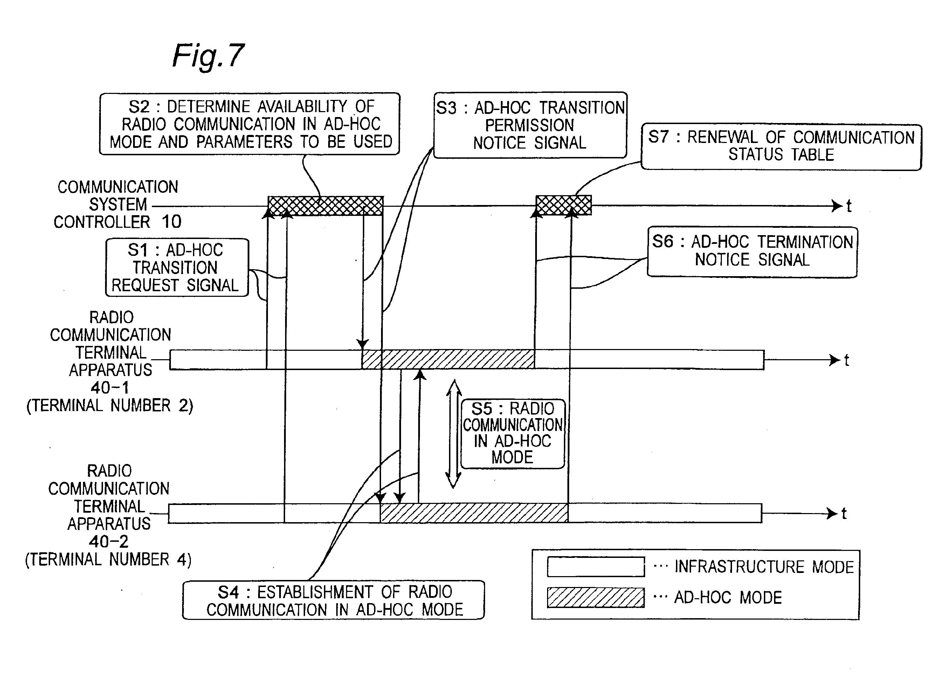

Fig. 7 is a sequence chart showing a first operation example of the radio communication system of Fig. 1. In the operation example, described below with reference to the sequence chart of Fig. 7 is an operation when it becomes necessary to communicate a large volume of data between the radio terminal apparatus 40-1 (whose terminal number is assumed to be 2) in the cell 51 and the radio terminal apparatus 40-2 (whose terminal number is assumed to be 4) in the cell 52.

In this case, first of all, each of the radio terminal apparatuses 40-1 and 40-2 notifies a communication establishment request signal to the communication system controller 10 (Step S1). In this case, the communication establishment request signal includes an ad-hoc mode transition request signal and an IP address of the other party for the communication. Next, the communication system controller 10 starts an approval operation for the shift to the ad-hoc mode with respect to the both radio terminal apparatuses 40-1 and 40-2 in response to the communication establishment request signals (Step S2). In this case, first of all, IP addresses of a pair of the radio terminal apparatuses 40-1 and 40-2, which notified the request signals, are converted into the terminal numbers of the radio terminal apparatuses using a DNS (Domain Name Server) table in the hard disk memory 6 not shown. In the present operation example, it is recognized that the radio terminal apparatuses 40 which issued the ad-hoc transition request signals are the terminal numbers 2 and 4. The communication system controller 10 judges whether or not the ad-hoc radio communication between the radio terminal apparatuses 40-1 and 40-2 is permitted referring to the ad-hoc radio communication permission table 6a, using the terminal numbers 2 and 4. When the ad-hoc radio communication permission table 6a of Fig. 5 is used, the radio communication between the radio terminal apparatuses 40-1 and 40-2 is permitted.

When the communication system controller 10 judges that the radio communication in the ad-hoc mode between the radio terminal apparatuses 40-1 and 40-2 is permitted as described above, and permits the radio communication in the ad-hoc mode between the radio terminal apparatuses 40-1 and 40-2, a channel or ESS-ID in the ad-hoc mode to be allocated to the pair of the radio terminal apparatuses 40-1 and 40-2 is determined with reference to the communication status table 6b, and is recorded in the communication status table 6b. For example, when the communication status table 6b is in the state shown in Fig. 6, the ESS-ID used for the terminal number 2 of the radio terminal apparatus 40-1 and the terminal number 4 of the radio terminal apparatus 40-2 is determined by the following procedure. First of all, ESS-IDs used in the infrastructure-mode communications and ESS-IDs (ID-A used by the terminal numbers 1 and 3, in the present example) currently used in the ad-hoc mode by the other radio terminal apparatuses 40 are deleted from candidates for ESS-ID to be used, and an arbitrary ESS-ID is selected from the remaining candidates for ESS-ID. The selected ESS-ID is determined as a communication parameter used by the both radio terminal apparatuses 40-1 and 40-2, and recorded in columns of the terminal number 2 of the radio terminal apparatus 40-1 and the terminal number 4 of the radio terminal apparatus 40-2 in the communication status table 6b.

Then, the communication system controller 10 transmits ad-hoc transition permission notice signals each including a determined communication parameter such as the channel or ESS-ID in the radio LAN to the respective radio terminal apparatuses 40-1 and 40-2, respectively, so as to shift the radio LAN communication mode of the both radio terminal apparatuses 40-1 and 40-2 to the ad-hoc mode (Step S3).

Next, the radio terminal apparatuses 40-1 and 40-2 establish the radio communication in the ad-hoc mode with the other party for the communication, using a communication parameter such as the channel or ESS-ID notified by the ad-hoc transition permission notice signal (Step S4). In this case, a time-out value T1 is set in the radio terminal apparatuses 40-1 and 40-2. When the radio communication cannot be established with the other party for the communication until the time T1 passes after the reception of the ad-hoc transition permission notice signal, the radio terminal apparatuses 40-1 and 40-2 automatically return to the infrastructure mode using the channel or ESS-ID before the transition to the ad-hoc mode, and notifies the communication system controller 10 of the failure of establishing the radio communication.

In this case, when the radio terminal apparatuses 40-1 and 40-2 successfully establish the radio communication in the ad-hoc mode, the data communication by the radio communication is performed directly between the radio terminal apparatuses 40-1 and 40-2 (Step S5). When the radio communication in the ad-hoc mode is terminated, the both radio terminal apparatuses 40-1 and 40-2 return to the infrastructure mode using the channel or ESS-ID before the transition to the ad-hoc mode, and transmit ad-hoc termination notice signals to the communication system controller 10, respectively (Step S6). In response to the ad-hoc termination notice signals, the communication system controller 10 rewrites columns of the both radio terminal apparatuses 40-1 and 40-2 in the communication status table 6b, so as to renew the communication status table 6b by recording therein that the both radio terminal apparatuses 40-1 and 40-2 are communicating in the infrastructure mode (Step S7).

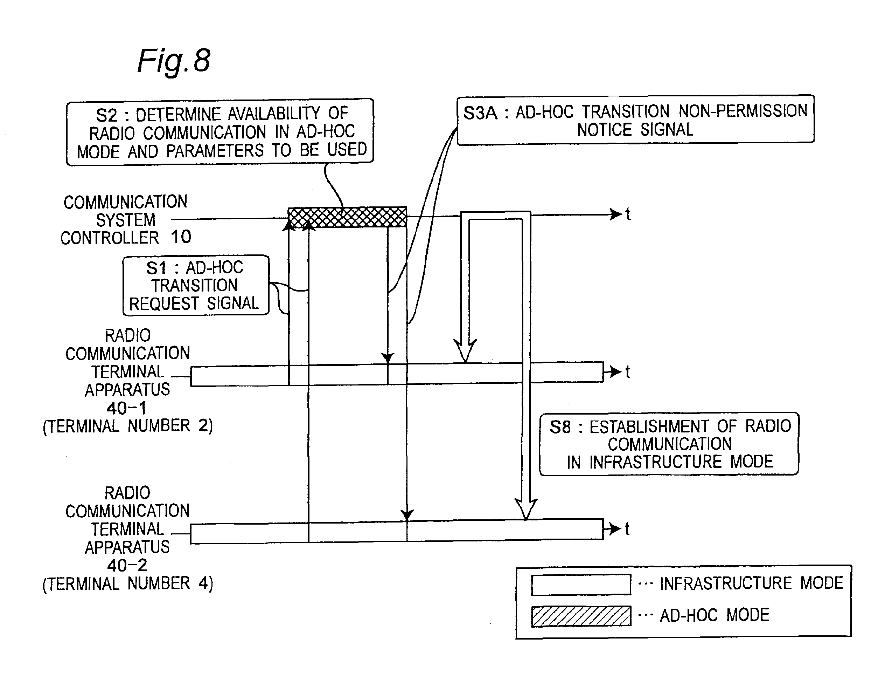

Fig. 8 is a sequence chart showing a second operation example of the radio communication system of Fig. 1. Fig. 8 shows an operation when the communication system controller 10 judges that the radio communication in the ad-hoc mode is not permitted in the both radio terminal apparatuses 40-1 and 40-2. In this case, operations from Steps S 1 to S2 are similar to those of Fig. 7. In the present example, when the communication system controller 10 judges that the radio communication in the ad-hoc mode is not permitted in the both radio communication apparatuses 40-1 and 40-2, ad-hoc transition non-permission signals are transmitted to the both radio communication apparatuses 40-1 and 40-2, respectively (Step S3A), and the both radio communication apparatuses 40-1 and 40-2 continue the radio communications in the infrastructure mode. The data communication between the radio communication apparatuses 40-1 and 40-2 is performed via the radio base station apparatuses 30-1 and 30-2 and the communication system controller 10 connected to the LAN 60 in the airplane (Step S8).

As described above, according to the radio communication system of the present preferred embodiment, the radio terminal apparatuses 40 using different channels or ESS-IDs in the infrastructure mode can shift to the radio communications in the ad-hoc mode. Accordingly, the communication quality can be assured in the in-flight space divided into the plurality of service areas using the different channels or ESS-ID, and the radio base station apparatuses 30, LAN 60 and communication system controller 10 are not subjected to loads by utilizing direct radio communication (ad-hoc mode) between the radio terminal apparatuses 40. In addition, the communication system controller 10 can allocate the channel or ESS-ID optimum for the ad-hoc mode communication between the radio terminal apparatuses 40 to the pair of radio terminal apparatuses 40, by controlling the communication status of all of the radio terminal apparatuses 40 using the communication status table 6b. Accordingly, the quality of the radio communication in the ad-hoc mode equal to or higher than a predetermined value can be established.

### MODIFIED PREFERRED EMBODIMENT

In the above mentioned preferred embodiment, the communication system controller 10 judges whether or not the shift to the ad-hoc mode is permitted, after receiving the ad-hoc transition request signals from the respective radio terminal apparatuses 40, however, the present invention is not limited to this. When the radio terminal apparatuses 40 are fixed in the in-flight space 50, respectively, the ad-hoc radio communication permission table 6a of Fig. 5 is made and stored in the respective radio terminal apparatus 40, and then, the respective radio terminal apparatuses 40 themselves can judge whether not the other party for the communication can perform the radio communication in the ad-hoc mode, based on the stored ad-hoc radio communication permission table 6a. Concretely speaking, when the radio terminal apparatus 40 requests the direct radio communication with a further radio terminal apparatus 40, the radio terminal apparatus 40 refers to the ad-hoc radio communication permission table 6a so as to judge whether or not the direct radio communication with the another radio terminal apparatus is permitted. When the direct radio communication is judged to be permitted, the radio terminal apparatus 40 transmits a request signal for requesting the direct radio communication with the further radio terminal apparatus 40 to the communication system controller 10 via the radio base station apparatus 30. In response to the request signal for the direct radio communication with another radio terminal apparatus transmitted from each radio terminal apparatus 40, the communication system controller 10 refers to the communication status table 6b so as to determine the communication parameter for a requested direct radio communication, and transmits a notice signal including the determined communication parameter to the radio terminal apparatus 40 which transmitted the request signal via the radio base station apparatus 30. Accordingly, the communication system controller 10 does not need to refer to the ad-hoc radio communication permission table 6a and to judge whether or not the radio communication in the ad-hoc mode is permitted. Such an advantageous effect is exhibited that the communication system controller 10 can determine the communication parameter such as the channel or ESS-ID with reference to only the communication status table 6b.

In the above described preferred embodiment or the modified preferred embodiment, for example, the DNS (Domain Name Server) table is allocated so that the terminal number of the radio terminal apparatus 40 can be uniquely determined from the IP address thereof, however, the present invention is not limited to this. The radio terminal apparatus 40 may notify the communication system controller 10 of the terminal number thereof, respectively, by inserting the terminal number thereof or a coordinate representation of the position thereof in the in-flight space 50 into the ad-hoc mode radio communication transition request signal. In other words, identification of the respective radio terminal apparatuses 40 is not necessarily made based on the IP address or the terminal number, and may be made based on the coordinate representation of the position of the radio terminal apparatus 40 (for example, two-dimensional or three-dimensional coordinate value).

In the above described preferred embodiment or the modified preferred embodiment, the communication system controller 10 notifies the radio terminal apparatus 40 which requested the shift to the ad-hoc mode of the communication parameter (channel or ESS-ID) used in the ad-hoc mode, however, the present invention is not limited this. The respective radio terminal apparatuses 40 which shift to the ad-hoc mode may establish the radio communication in the ad-hoc mode by waiting for a response signal received from the other party of the terminal apparatus for the communication in each channel or ESS-ID while scanning all of the channels or ESS-IDs which are possibly used in the ad-hoc mode, and determining the communication parameter such as the channel or ESS-ID based on the response signal received from the other party of the terminal apparatus for the communication in a predetermined time interval. According to this configuration, it is possible to omit the function of determining the communication parameter in the communication system controller 10, and to simplify the configuration of the communication system controller 10. In addition, in this case, it is possible to ensure that communication quality in the ad-hoc mode radio communication is equal to or higher than a predetermined value, by adopting only such a channel or ESS-ID in which communication quality having a certain level is assured for the radio communication, when the respective radio terminal apparatuses 40 establish the radio communication in the ad-hoc mode with the other party of radio terminal apparatus 40 by scanning the channels or ESS-ID.

In the above described preferred embodiment or the modified preferred embodiment, the channel or ES-IDD (communication identifier) is used as the communication parameter, however, the present invention is not limited to this. A radio-wave frequency may be used as the communication parameter.

In the above described preferred embodiment, the radio LAN system in the in-flight space 50 of the airplane is described, however, the present invention is not limited to this. For example, the present invention can be applied to various radio LAN systems in which the positions of the radio terminal apparatuses 40 are previously determined, such as a hot-spot service (in which users' positions are previously determined) in a PC teaching classroom, an LL classroom in a school, a stadium (effectively used because no obstacle is present between respective seats in the stadium, which makes it easy to receive a radio wave), and the like, or a radio LAN system in a company (in which respective users' desks are fixed).

### INDUSTRIAL APPLICABILITY

The radio communication system according to the present invention realizes establishment of the radio communication in the ad-hoc mode in such an environment in which the radio terminal apparatuses 40 are closely disposed, and is effective as a technology for preventing deterioration of the communication quality of the whole network.

## Claims

1. A radio communication system comprising:
a plurality of radio terminal apparatuses each arranged at a previously determined position;
at least one radio base station apparatus for holding a radio communication with said plurality of radio terminal apparatuses; and
a communication control apparatus connected to said respective radio base station apparatuses via a cable circuit, said communication control apparatus communicating with said respective radio terminal apparatuses via one of said radio base station apparatuses,
wherein said communication control apparatus comprises:
storage means for storing therein a first table indicating permission or non-permission of direct radio communication between said respective radio terminal apparatuses; and
control means for judging whether or not the direct radio communication is permitted based on the first table in response to a request signal for requesting the direct radio communication with a further radio terminal apparatus received from said radio terminal apparatus via said radio base station apparatus, and for transmitting a notice signal including a result of the judgment to said radio terminal apparatus which transmitted the request signal, via said radio base station apparatus.

2. The radio communication system as claimed in Claim 1,
wherein said storage means of said communication control apparatus further stores therein a second table indicating communication parameters currently used by each of said radio terminal apparatuses, and
wherien said control means of said communication control apparatus determines a communication parameter for the requested direct radio communication referring to the second table when the request is possible, and transmits a notice signal including the communication parameter to said radio terminal apparatus which transmitted the request signal, via said radio base station apparatus.

3. The radio communication system as claimed in Claim 1,
wherein said radio terminal apparatus which transmitted the request signal transmits a response signal request for a direct radio communication with a terminal apparatus of other party, using a plurality of communication parameters, in response to the notice signal, and
wherein said radio terminal apparatus which transmitted the request signal determines a communication parameter with said terminal apparatus of other party, based on a response signal transmitted from said terminal apparatus of other party in response to the response signal request.

4. A radio communication system comprising:
a plurality of radio terminal apparatuses each arranged at a previously determined position;
at least one radio base station apparatus for holding a radio communication with said plurality of radio terminal apparatuses; and
a communication control apparatus connected to said respective radio base station apparatuses via a cable circuit, said communication control apparatus communicating with said respective radio terminal apparatuses via one of said radio base station apparatuses,
wherein each of said radio terminal apparatuses comprises:
first storage means for storing therein a first table indicating permission or non-permission of direct radio communication between said respective radio terminal apparatuses; and
communication control means for judging whether or not the direct radio communication with a further radio terminal apparatus is permitted referring to the first table, upon requesting the direct radio communication with said further radio terminal apparatus.

5. The radio communication system as claimed in Claim 4,
wherein said communication control means of each of said radio terminal apparatuses transmits a request signal for the direct radio communication with said further radio terminal apparatus, to said communication control apparatus via said radio base station apparatus, when the direct radio communication is possible, and
wherein said communication control apparatus comprises:
second storage means for storing therein a second table indicating communication parameters currently used by each of said radio terminal apparatuses; and
control means for determining the communication parameter for the requested direct radio communication referring to the second table in response to the request signal for the direct radio communication with said further radio terminal apparatus transmitted from each of said radio terminal apparatuses, and for transmitting a notice signal including the communication parameter to said radio terminal apparatus which transmitted the request signal via the radio base station apparatus.

6. The radio communication system as claimed in Claim 5,
wherein said communication control means of each of said radio terminal apparatuses transmits a response signal request for a direct radio communication with a terminal apparatus of other party, using a plurality of communication parameters, when the direct radio communication is possible, and
wherein said communication control means of each of said radio terminal apparatuses determines a communication parameter with said terminal apparatus of other party, based on a response signal transmitted from said terminal apparatus of other party in response to the response signal request.

7. The radio communication system as claimed in any of Claims 1 to 6,
wherein the communication parameter is one of a channel, a communication identifier, and a radio-wave frequency.

8. The radio communication system as claimed in any of Claims 1 to 7,
wherein each of said respective radio terminal apparatuses is identified by an apparatus identifier including one of an IP address, a terminal number, and a positional coordinate representation.

9. The radio communication system as claimed in Claim 8,
wherein the request signal includes the apparatus identifier.

## Amended claims

### Amended claims under Art. 19.1 PCT

**1.** (Amended) A radio communication system comprising:
a plurality of radio terminal apparatuses each arranged at a previously determined position in a predetermined space;
at least one radio base station apparatus for holding a radio communication with said plurality of radio terminal apparatuses; and
a communication control apparatus connected to said respective radio base station apparatuses via a cable circuit, said communication control apparatus communicating with said respective radio terminal apparatuses via one of said radio base station apparatuses,
wherein said communication control apparatus comprises:
storage means for storing therein a first table indicating permission or non-permission of direct radio communication between said respective radio terminal apparatuses, where the first table is generated based on one of communication quality measured in said space and estimation made by using an electromagnetic-field simulation; and
control means for judging whether or not the direct radio communication is permitted based on the first table in response to a request signal for requesting the direct radio communication with a further radio terminal apparatus received from said radio terminal apparatus via said radio base station apparatus, and for transmitting a notice signal including a result of the judgment to said radio terminal apparatus which transmitted the request signal, via said radio base station apparatus.

**2.** The radio communication system as claimed in Claim 1,
wherein said storage means of said communication control apparatus further stores therein a second table indicating communication parameters currently used by each of said radio terminal apparatuses, and
wherien said control means of said communication control apparatus determines a communication parameter for the requested direct radio communication referring to the second table when the request is possible, and transmits a notice signal including the communication parameter to said radio terminal apparatus which transmitted the request signal, via said radio base station apparatus.

**3.** The radio communication system as claimed in Claim 1,
wherein said radio terminal apparatus which transmitted the request signal transmits a response signal request for a direct radio communication with a terminal apparatus of other party, using a plurality of communication parameters, in response to the notice signal, and
wherein said radio terminal apparatus which transmitted the request signal determines a communication parameter with said terminal apparatus of other party, based on a response signal transmitted from said terminal apparatus of other party in response to the response signal request.

**4.** (Amended) A radio communication system comprising:
a plurality of radio terminal apparatuses each arranged at a previously determined position in a predetermined space;
at least one radio base station apparatus for holding a radio communication with said plurality of radio terminal apparatuses; and
a communication control apparatus connected to said respective radio base station apparatuses via a cable circuit, said communication control apparatus communicating with said respective radio terminal apparatuses via one of said radio base station apparatuses,
wherein each of said radio terminal apparatuses comprises:
first storage means for storing therein a first table indicating permission or non-permission of direct radio communication between said respective radio terminal apparatuses, where the first table is generated based on one of communication quality measured in said space and estimation made by using an electromagnetic-field simulation; and
communication control means for judging whether or not the direct radio communication with a further radio terminal apparatus is permitted referring to the first table, upon requesting the direct radio communication with said further radio terminal apparatus.

**5.** The radio communication system as claimed in Claim 4,
wherein said communication control means of each of said radio terminal apparatuses transmits a request signal for the direct radio communication with said further radio terminal apparatus, to said communication control apparatus via said radio base station apparatus, when the direct radio communication is possible, and
wherein said communication control apparatus comprises:
second storage means for storing therein a second table indicating communication parameters currently used by each of said radio terminal apparatuses; and
control means for determining the communication parameter for the requested direct radio communication referring to the second table in response to the request signal for the direct radio communication with said further radio terminal apparatus transmitted from each of said radio terminal apparatuses, and for transmitting a notice signal including the communication parameter to said radio terminal apparatus which transmitted the request signal via the radio base station apparatus.

**6.** The radio communication system as claimed in Claim 5,
wherein said communication control means of each of said radio terminal apparatuses transmits a response signal request for a direct radio communication with a terminal apparatus of other party, using a plurality of communication parameters, when the direct radio communication is possible, and
wherein said communication control means of each of said radio terminal apparatuses determines a communication parameter with said terminal apparatus of other party, based on a response signal transmitted from said terminal apparatus of other party in response to the response signal request.

**7.** The radio communication system as claimed in any of Claims 1 to 6,
wherein the communication parameter is one of a channel, a communication identifier, and a radio-wave frequency.

**8.** The radio communication system as claimed in any of Claims 1 to 7,
wherein each of said respective radio terminal apparatuses is identified by an apparatus identifier including one of an IP address, a terminal number, and a positional coordinate representation.

**9.** The radio communication system as claimed in Claim 8,
wherein the request signal includes the apparatus identifier.

Claims 1 and 4 are amended by limitation so as to clearly describe the following features:
The plurality of radio terminal apparatuses are each arranged at a previously determined position in a predetermined space (referred to as a feature "A" hereinafter); and
The first table is generated based on one of communication quality measured in the space and estimation made by using an electromagnetic-field simulation (referred to as a feature "B" hereinafter).

The features "A" and "B" of the present invention are not disclosed or suggested in the first to third cited documents cited in the written opinion by the International Searching Authority.

According to the radio communication system of the present invention, the radio terminal apparatuses using different channels or ESS-IDs in the infrastructure mode can shift to radio communications in an ad-hoc mode. Accordingly, the communication quality can be assured in an in-flight space divided into a plurality of service areas using the different channels or ESS-ID, and radio base station apparatuses and communication system controller are not subjected to loads by utilizing direct radio communication (ad-hoc mode) between the radio terminal apparatuses. In addition, the communication system controller can allocate the channel or ESS-ID optimum for the ad-hoc mode communication between the radio terminal apparatuses to a pair of radio terminal apparatuses, by controlling the communication status of all of the radio terminal apparatuses using a table. Accordingly, such an advantageous effect is exhibited that the quality of the radio communication in the ad-hoc mode equal to or higher than a predetermined value can be established.
